# EUROPÄISCHE PATENTANMELDUNG

(11) **EP 4 270 089 A2**
(43) Veröffentlichungstag der Anmeldung: **01.11.2023**
(21) Anmeldenummer: 23185884.6
(22) Anmeldetag: 25.09.2014
(51) Int. Cl.: G02B 27/01

(54) **BRILLENGLAS FÜR EINE AUF DEN KOPF EINES BENUTZERS AUFSETZBARE UND EIN BILD ERZEUGENDE ANZEIGEVORRICHTUNG SOWIE ANZEIGEVORRICHTUNG MIT EINEM SOLCHEN BRILLENGLAS**

(30) Priorität: 27.09.2013 DE 102013219625
(62) Teilanmeldung aus: 14777063.0
(71) Anmelder: tooz technologies GmbH, 73430 Aalen (DE)
(72) Erfinder: DOBSCHAL, Hans-Jürgen, 99518 Bad Sulza (DE)
(74) Vertreter: Patentanwälte Geyer, Fehners & Partner mbB

(57) **Zusammenfassung**

Es wird ein Brillenglas für eine auf den Kopf eines Benutzers aufsetzbare und ein Bild erzeugende Anzeigevorrichtung (1),
mit einer Vorderseite (5) und einer Rückseite (6),
und mit, in Draufsicht auf das Brillenglas (3, 4) gesehen, einem Einkoppelabschnitt (10) in einem Randbereich (15) des Brillenglases (3, 4) und einem Auskoppelabschnitt (11) in einem Mittelbereich (16) des Brillenglases (3, 4), bereitgestellt,
wobei das Brillenglas (3, 4) dazu geeignet ist, Lichtbündel (L1, L2, L3) von Pixeln des erzeugten Bildes über den Einkoppelabschnitt (10) in das Brillenglas (3, 4) einzukoppeln, im Brillenglas (3, 4) bis zum Auskoppelabschnitt (11) zu führen und über den Auskoppelabschnitt (11) aus dem Brillenglas (3, 4) auszukoppeln,
wobei bei der Einkopplung der Einkoppelabschnitt (10) zumindest eines der Lichtbündel (L1) in jeweils mehrere erste Teilbündel (L1₁, L1₂, L1₃, L1₄) so aufteilt und so in einer ersten Richtung voneinander versetzt in das Brillenglas (3, 4) einkoppelt, dass die ersten Teilbündel (L1₁-L1₄) im Brillenglas (3, 4) entlang einer quer zur ersten Richtung verlaufenden zweiten Richtung bis zum Auskoppelabschnitt (11) geführt sind,
wobei bei der Auskopplung der Auskoppelabschnitt (11) zumindest eines der ersten Teilbündel (L1₁) in jeweils mehrere zweite Teilbündel (L1₁₁, L1₁₂, L1₁₃, L1₁₄) aufteilt und in der zweiten Richtung voneinander versetzt aus dem Brillenglas auskoppelt,
wobei der Einkoppelabschnitt (10) mehrere teilreflektive Facetten (32) aufweist, um durch Reflexion und Transmission die Aufteilung in die ersten Teilbündel (L1₁, L1₂, L1₃, L1₄) zu bewirken,
und wobei der Auskoppelabschnitt (11) mehrere teilreflektive Facetten (35) aufweist, um durch Reflexion und Transmission die Aufteilung in die zweiten Teilbündel (L1₁₁, L1₁₂, L1₁₃, L1₁₄) zu bewirken.

## Beschreibung

Die vorliegende Erfindung betrifft ein Brillenglas für eine auf den Kopf eines Benutzers aufsetzbare und ein Bild erzeugende Anzeigevorrichtung sowie eine Anzeigevorrichtung mit einem solchen Brillenglas.

Bei einem solchen Brillenglas besteht grundsätzlich der Wunsch, dass dieses möglichst dünn ist, um den gewünschten Tragekomfort zu gewährleisten. Die dünne Ausbildung des Brillenglases führt jedoch nachteilig dazu, dass die Eyebox (also der Bereich, in dem das im Brillenglas geführte und aus dem Brillenglas ausgekoppelte Bild als virtuelles Bild wahrnehmen lässt) in der Regel sehr klein ist.

Ausgehend hiervon ist es daher Aufgabe der Erfindung, ein Brillenglas für eine auf den Kopf eines Benutzers aufsetzbare und ein Bild erzeugende Anzeigevorrichtung bereitzustellen, wobei eine große Eyebox mit gleichzeitig ausreichend großem Sichtfeld bereitgestellt werden kann.

Die Erfindung ist im Anspruch 1 definiert. Vorteilhafte Weiterbildungen sind in den abhängigen Ansprüchen angegeben.

Erfindungsgemäß wird die Aufgabe durch ein Brillenglas für eine auf den Kopf eines Benutzers aufsetzbare und ein Bild erzeugende Anzeigevorrichtung gelöst, wobei das Brillenglas eine Vorderseite und eine Rückseite aufweist und die Vorderseite und/oder die Rückseite gekrümmt sind/ist, und, in Draufsicht auf das Brillenglas gesehen, einen Einkoppelabschnitt in einem Randbereich des Brillenglases und einen Auskoppelabschnitt im Mittelbereich des Brillenglases aufweist, wobei das Brillenglas dazu geeignet ist, Lichtbündel von Pixeln des erzeugten Bildes über den Einkoppelabschnitt in das Brillenglas einzukoppeln, im Brillenglas bis zum Auskoppelabschnitt zu führen und über den Auskoppelabschnitt aus dem Brillenglas auszukoppeln, um das erzeugte Bild als virtuelles Bild darzustellen, wobei bei der Einkopplung der Einkoppelabschnitt zumindest eines der Lichtbündel in jeweils mehrere erste Teilbündel so aufteilt und so in einer ersten Richtung voneinander versetzt in das Brillenglas einkoppelt, dass die ersten Teilbündel im Brillenglas entlang einer quer zur ersten Richtung verlaufenden zweiten Richtung bis zum Auskoppelabschnitt geführt sind, und wobei bei der Auskopplung der Auskoppelabschnitt zumindest eines der ersten Teilbündel in jeweils mehrere zweite Teilbündel aufteilt und in der zweiten Richtung voneinander versetzt aus dem Brillenglas auskoppelt.

Bei dem erfindungsgemäßen Brillenglas ist somit der Einkoppelabschnitt als erster Beamexpander ausgebildet, der eine Aufweitung in der ersten Richtung durchführt. Der Auskoppelabschnitt ist als zweiter Beamexpander ausgebildet, der eine Aufweitung in der zweiten Richtung durchführt. Im Ergebnis ist die Eyebox (der Bereich, in den ein Benutzer das ausgekoppelte virtuelle Bild wahrnehmen kann) sowohl in der ersten als auch in der zweiten Richtung vergrößert im Vergleich zu einem Brillenglas, bei dem die beschriebenen Aufweitungen in der ersten und zweiten Richtung nicht durchgeführt werden.

Die erste und zweite Richtung sind bevorzugt zueinander orthogonal.

Bei dem erfindungsgemäßen Brillenglas kann der Einkoppel- und/oder der Auskoppelabschnitt eine abbildende Eigenschaft aufweisen.

Insbesondere kann der Einkoppel- und der Auskoppelabschnitt jeweils ein Gitter aufweisen. Die Gitter können jeweils als reflektives Gitter und insbesondere als reflektives Volumengitter oder reflektives Hologramm ausgebildet sein. Ferner ist es möglich, dass die Gitter an der Vorderseite oder Rückseite des Brillenglases gebildet sind.

Insbesondere können die bzw. kann das Gitter des Einkoppel- und/oder Auskoppelabschnitts als abbildendes Gitter ausgebildet sein. Damit ist es möglich, Abbildungsfehler zu kompensieren, die insbesondere deshalb auftreten, da die Lichtbündel unter einem sehr flachen Winkel (z.B. aufgrund der Führung durch Totalreflexion in dem Brillenglas) auf das Auskoppelgitter treffen. Dabei handelt es sich insbesondere um Astigmatismus und Koma.

Bei dem erfindungsgemäßen Brillenglas können die ersten Teilbündel in Abhängigkeit der Position des zugehörigen Pixels maximal n mal auf das Gitter des Auskoppelabschnitts (nachfolgend auch Auskoppelgitter genannt) treffen, wobei n eine ganze Zahl größer oder gleich drei ist, und wobei die ersten Teilbündel in Abhängigkeit der Position des zugehörigen Pixels bei 1 bis m aufeinander folgenden Auftreffen auf das Gitter des Auskoppelabschnitts ausgekoppelt werden, wobei m eine ganze Zahl größer oder gleich eins und kleiner als n ist und die Auskopplung spätestens beim (n-m+1)-ten Auftreffen beginnt.

Durch diese Auskopplung der Lichtbündel bzw. der entsprechenden zweiten Teilbündel in Abhängigkeit der Position des zugehörigen Pixels kann das Auskoppelgitter so an die auftreffenden ersten Teilbündel angepasst werden, dass die gewünschte Eyebox bei gleichzeitig vorgegebenem Sichtfeld realisiert werden kann. Da die ersten Teilbündel jeweils an unterschiedlichen Orten bei ihrem aufeinanderfolgenden Auftreffen auf das Auskoppelgitter treffen, ist die dazu notwendige entsprechende Anpassung des Auskoppelgitters leicht möglich.

Ferner kann bei dem erfindungsgemäßen Brillenglas das Gitter des Auskoppelabschnitts so ausgelegt sein, dass seine Beugungseffizienz für ein erstes Teilbündel von der ersten bis zur m-ten Auskopplung hin ansteigt.

Bei dem erfindungsgemäßen Brillenglas kann das Gitter des Einkoppelabschnitts und das Gitter des Auskoppelabschnitts jeweils eine Überlagerung von mehreren Einzelgittern sein, die auf unterschiedliche Mittenfrequenzen ausgelegt sind, wobei die Mittenfrequenzen der einzelnen Gitter für die beiden Gitter jeweils paarweise zusammenfallen.

Ferner kann bei dem erfindungsgemäßen Brillenglas der Einkoppelabschnitt ein erstes und ein zweites Einkoppelgitter aufweisen, wobei das zumindest eine Lichtbündel vom ersten Einkoppelgitter auf das zweite Einkoppelgitter gelenkt wird, und das zweite Einkoppelgitter die Aufteilung in die mehreren ersten Teilbündel bewirkt. Das erste und zweite Einkoppelgitter kann jeweils als reflektives Gitter und insbesondere als reflektives Volumengitter oder reflektives Hologramm ausgebildet sein. Die beiden Einkoppelgitter können in gleicher Weise weitergebildet sein wie die beiden Gitter von Einkoppel- und Auskoppelabschnitt zur Einkopplung des ersten Teilbündels in das Brillenglas und zur Auskopplung des zweiten Teilbündels.

Insbesondere können das erste und zweite Einkoppelgitter so ausgebildet sein, dass wellenlängenabhängige Beugungseffekte kompensiert werden. Dazu kann z.B. die erste Beugungsordnung des ersten Einkoppelgitters zur Umlenkung auf das zweite Einkoppelgitter verwendet werden. Die Aufteilung in die mehreren ersten Teilbündel erfolgt dann am zweiten Einkoppelgitter bevorzugt ebenfalls durch die erste Beugungsordnung. Der Teil des Lichtbündels, der erneut auf das zweite Einkoppelgitter treffen soll, wird bei dem bzw. den bisherigen Auftreffen durch die nullte Beugungsordnung am zweiten Einkoppelgitter reflektiert.

Natürlich können die Gitter des Einkoppel- und/oder Auskoppelabschnitts aus als transmissive Gitter ausgebildet sein.

Dem zweiten Einkoppelgitter kann eine Reflexionsfläche (z.B. eine Reflexionsschicht, ein Reflexionsschichtsystem oder einer Grenzfläche, an der inneren Totalreflexion stattfindet) gegenüberliegen, die dazu genutzt wird, dass das zumindest eine Lichtbündel mehrmals an verschiedenen Positionen auf das zweite Einkoppelgitter trifft.

Ferner kann bei dem erfindungsgemäßen Brillenglas der Einkoppelabschnitt und/oder der Auskoppelabschnitt mehrere teilreflektive Facetten aufweisen, um durch Reflexion und Transmission (und nicht durch eine diffraktive Wirkung) die Aufteilung in die ersten und/oder zweiten Teilbündel zu bewirken.

Hinter den teilreflektiven Facetten kann jeweils eine Reflexionsschicht oder eine Reflexionsfläche (wie z.B. eine Fläche zur internen Totalreflexion) angeordnet sein, so dass durch die Facetten transmittierte Teile an dieser Reflexionsschicht bzw. -fläche reflektiert werden, von hinten durch die teilreflektiven Facetten laufen und von einer zweiten Reflexionsschicht oder Reflexionsfläche erneut auf die reflektiven Facetten an einem zum ersten Auftreffen versetzten Ort reflektiert werden.

Die Reflektivität der teilreflektiven Facetten kann von der ersten bis zur letzten Aufteilung in die entsprechenden Teilbündel ansteigen.

Der Auskoppelabschnitt kann Teil des Brillenglases sein. Es ist jedoch möglich, dass der Auskoppelabschnitt separat hergestellt und am Randbereich mit dem Brillenglas verbunden ist.

Das erfindungsgemäße Brillenglas kann aus Glas und/oder Kunststoff hergestellt sein.

Wenn nur die Vorderseite oder nur die Rückseite des Brillenglases gekrümmt ausgebildet ist, ist die andere der beiden Seiten plan. Bevorzugt sind sowohl Vorderseite als auch Rückseite gekrümmt ausgebildet.

Insbesondere können die bzw. kann das Gitter oder die Facetten der Einkoppel- und/oder Auskoppelabschnitte auf der Vorderseite des Brillenglases ausgebildet sein. Die Vorderseite ist dabei die Seite, die beim bestimmungsgemäßen Gebrauch vom Auge des Benutzers weg weist.

Unter einer Facette wird insbesondere ein Flächenstück, ein Flächenelement oder eine Fläche verstanden. Das Flächenstück, das Flächenelement bzw. die Fläche kann die beschriebene optische Wirkung der Facette bereitstellen.

Insbesondere kann das Brillenglas so ausgebildet sein, dass sich mehrere Auskopplungen eines ersten Teilbündels und somit mehrere zweite Teilbündel des ersten Teilbündels in der Eyebox teilweise überlappen.

Insbesondere können das Brillenglas und der Auskoppelabschnitt so ausgebildet sein, dass der Benutzer das erzeugte Bild in Überlagerung mit der Umgebung wahrnehmen kann.

Das erfindungsgemäße Brillenglas kann auch als zweidimensionaler Beamexpander bezeichnet werden.

Der Einkoppelabschnitt kann z.B. eine kollimierende Wirkung in der Art aufweisen, dass das zumindest eine Lichtbündel zuerst kollimiert und dann in die ersten Teilbündel aufgeteilt wird.

Es wird ferner eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten Abbildungsoptik, die ein erfindungsgemäßes Brillenglas aufweist und die das erzeugte Bild im auf den Kopf aufgesetzten Zustand der Haltevorrichtung so abbildet, dass es der Benutzer als virtuelles Bild wahrnehmen kann, bereitgestellt. Die Haltevorrichtung kann brillenartig sein.

Die Abbildungsoptik kann das Brillenglas als einziges optisches Element aufweisen. Es ist jedoch auch möglich, dass die Abbildungsoptik neben dem Brillenglas noch zumindest ein weiteres optisches Element umfasst.

So kann das weitere optische Element z.B. eine Kollimationsoptik sein, die zwischen dem Brillenglas und dem Bilderzeugungsmodul angeordnet ist, so dass die Lichtbündel vom Bilderzeugungsmodul als kollimierte Bündel in das Brillenglas eingekoppelt werden.

Das Bilderzeugungsmodul kann insbesondere einen flächigen Bildgeber aufweisen, wie z.B. ein LCD-Modul, ein LCoS-Modul, ein OLED-Modul oder eine Kippspiegelmatrix. Der Bildgeber kann selbstleuchtend oder nicht selbstleuchtend sein.

Das Bilderzeugungsmodul kann insbesondere so ausgebildet sein, dass es ein monochromatisches oder ein mehrfarbiges Bild erzeugt.

Des weiteren kann zwischen dem Brillenglas und dem Bilderzeugungsmodul ein Verlaufsfilter angeordnet sein. Zusätzlich oder alternativ kann das Bilderzeugungsmodul eine ortsabhängige Variation der abgestrahlten Lichtintensität aufweisen. Damit kann wiederum eine möglichst homogene Intensität im für den Benutzer wahrnehmbaren Bild erreicht werden.

Die erfindungsgemäße Anzeigevorrichtung kann weitere, dem Fachmann bekannte Elemente aufweisen, die zu ihrem Betrieb notwendig sind.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine schematische perspektivische Darstellung einer Ausführungsform der erfindungsgemäßen Anzeigevorrichtung;
- Fig. 2: eine Schnittansicht des ersten Brillenglases der Anzeigevorrichtung von Fig. 1;
- Fig. 3: eine schematische perspektivische Darstellung des erfindungsgemäßen Brillenglases;
- Fig. 4: eine Ansicht des Einkoppelabschnitts 10;
- Fig. 5: eine Schnittansicht des Brillenglases;
- Fig. 6a-6e: Detailansichten gemäß Fig. 2 zu unterschiedlichen Auskopplungen eines ersten Lichtbündels L1;
- Fig. 7: eine Draufsicht der ausgekoppelten Teillichtbündel gemäß Fig. 6a-6e in der Ebene der Augenpupille;
- Fig. 8a-8e: Detailansichten gemäß Fig. 2 zu unterschiedlichen Auskopplungen eines zweiten Lichtbündels L2;
- Fig. 9: eine Draufsicht der ausgekoppelten Teillichtbündel gemäß Fig. 8a-8e in der Ebene der Augenpupille;
- Fig. 10a-10e: Detailansichten gemäß Fig. 6a-6e zu unterschiedlichen Auskopplungen eines dritten Lichtbündels L3;
- Fig. 11: eine Draufsicht der ausgekoppelten Teillichtbündel gemäß Fig. 10a-10e in der Ebene der Augenpupille;
- Fig. 12: eine weitere Draufsicht der ausgekoppelten zweiten Teilbündel;
- Fig. 13: eine Ansicht des Einkoppelabschnitts 10 gemäß einer weiteren Ausführungsform, und
- Fig. 14: eine Schnittansicht des Brillenglases 3 zur Erläuterung der weiteren Ausführungsform.

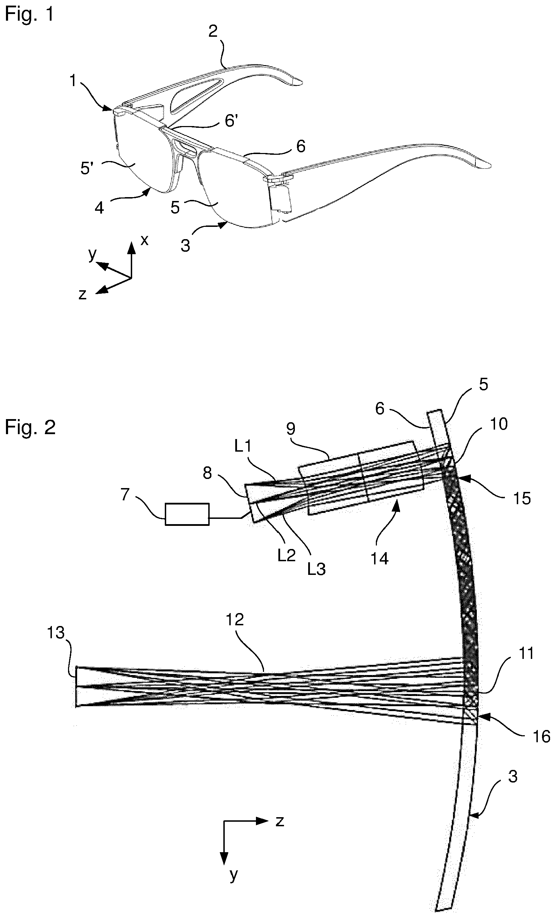

Bei der in Fig. 1 gezeigten Ausführungsform umfasst die erfindungsgemäße Anzeigevorrichtung 1 eine auf den Kopf eines Benutzers aufsetzbare Haltevorrichtung 2, die z.B. in Art eines herkömmlichen Brillengestells ausgebildet sein kann, sowie ein erstes und ein zweites Lichtführungselement 3, 4 in Form eines ersten und zweiten Brillenglases, die an der Haltevorrichtung 2 befestigt sind.

Die beiden Brillengläser 3, 4 weisen jeweils eine gekrümmte Vorderseite 5, 5' und eine gekrümmte Rückseite 6, 6' auf.

In Fig. 2 ist in einer schematischen Draufsicht das erste Brillenglas 3 in Verbindung mit weiteren Teilen der erfindungsgemäßen Anzeigevorrichtung 1 gezeigt. Das Brillenglas weist eine Dicke von 1,5 mm auf, wobei der Krümmungsradius von Vorder- und Rückseite 5, 6 jeweils 100 mm beträgt. Als Material für das Brillenglas 3 wird PMMA (Zeomex) verwendet. Die Anzeigevorrichtung 1 umfasst ferner eine Steuereinheit 7, ein Bilderzeugungsmodul 8 (das hier beispielsweise einen flächigen Lichtmodulator in Form eines OLED-Moduls aufweist) sowie eine zwischen dem Bilderzeugungsmodul 8 und dem ersten Brillenglas 3 angeordnete Zusatzoptik 9. Die Zusatzoptik 9 ist optional vorgesehen.

In einem Randbereich 15 des ersten Brillenglases 3 ist ein diffraktiver Einkoppelabschnitt 10 und davon beabstandet ist ein diffraktiver Auskoppelabschnitt 11 in einem Mittelbereich 16 des Brillenglases 3 ausgebildet. Ferner ist in Fig. 2 schematisch die Pupille 12 und die Netzhaut 13 eines Auges eines die erfindungsgemäße Anzeigevorrichtung 1 tragenden Benutzers eingezeichnet. Des weiteren ist schematisch der Strahlengang von drei Lichtbündeln L1, L2 und L3 vom Bilderzeugungsmodul 8 bis zur Netzhaut 13 eingezeichnet.

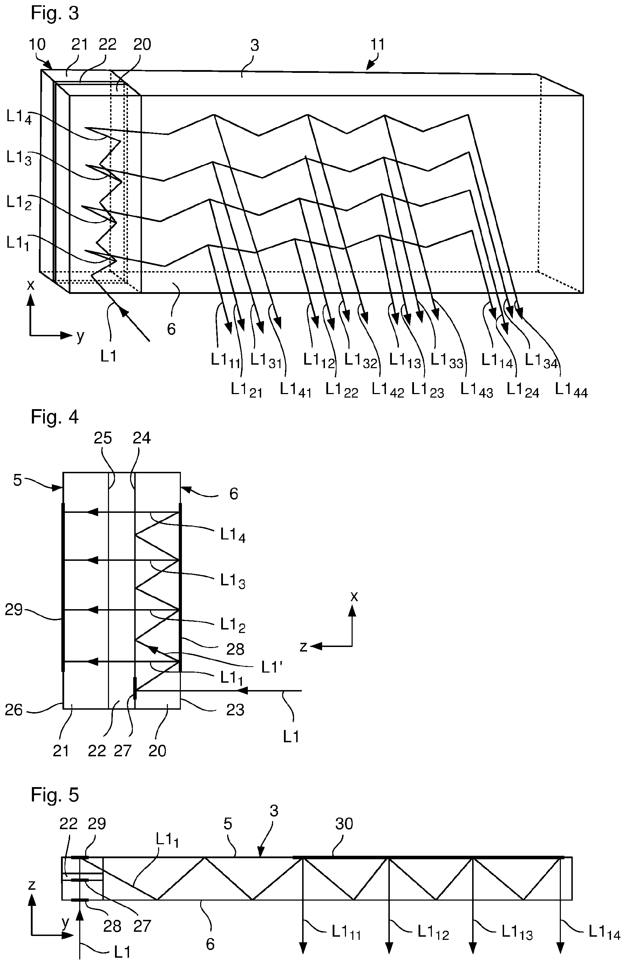

Die vom Bildgeber 8 abgegebenen Lichtbündel L1-L3 (jedes Lichtbündel L1-L3 geht von einem von mehreren Pixeln des flächigen Lichtmodulators des Bilderzeugungsmoduls 8 aus) werden von der Zusatzoptik 9 auf die Rückseite 6 des ersten Brillenglases 3 gerichtet, treten über die Rückseite 6 in das Brillenglas 3 ein und treffen auf den Einkoppelabschnitt 10. An dem Einkoppelabschnitt 10 werden die Lichtbündel L1-L3 jeweils in vier erste Teilbündel L1₁, L1₂, L1₃ und L1₄ aufgeteilt, die in der x-Richtung (erste Richtung) voneinander versetzt bzw. beabstandet sind, wie in Fig. 3 schematisch dargestellt ist. Zur Vereinfachung der Darstellung sind in Fig. 3 nur das Lichtbündel L1 sowie die vier ersten Teilbündel L1₁-L1₄ dargestellt und sind bei der Darstellung in Fig. 3 sowie in Fig. 4 und 5 die Vorder- und Rückseite 5, 6 nicht gekrümmt, sondern plan gezeigt. Ferner wird im wesentlichen nur das Lichtbündel L1 in der nachfolgenden Beschreibung erwähnt. Die Beschreibung bezieht sich natürlich auch auf die anderen Lichtbündel L2, L3 des Bilderzeugungsmoduls 8.

Die ersten Teilbündel L1₁-L1₄ werden vom Einkoppelabschnitt 10 ferner in einer zweiten Richtung (y-Richtung) umgelenkt und in das Brillenglas 3 eingekoppelt, dass sie auf die Rückseite 6 unter einem solchen Winkel treffen, bei dem innere Totalreflexion auftritt. Somit werden die ersten Teilbündel L1₁-L1₄ mittels innerer Totalreflexion an der Rück- und Vorderseite 6, 5 bis zum Auskoppelabschnitt 11 geführt, der eine Auskopplung der ersten Teilbündel L1₁-L1₄ über die Rückseite 6 so bewirkt, dass ein Benutzer ein von dem Bildgeber 8 erzeugtes Bild als virtuelles Bild wahrnehmen kann. Die Auskopplung erfolgt so, dass die ersten Teilbündel L1₁-L1₄ jeweils in mehrere zweite Teilbündel L1₁₁-L1₁₄ aufgeteilt und in y-Richtung voneinander beabstandet ausgekoppelt werden, wie nachfolgend noch im Detail beschrieben wird. Die Zusatzoptik 9 in Verbindung mit dem ersten Brillenglas 3 und dem Einkoppel- sowie Auskoppelabschnitt 10, 11 bilden somit eine Abbildungsoptik 14, die das mittels des Bilderzeugungsmoduls 8 erzeugte Bild als virtuelles Bild für den Benutzer abbildet.

Aufgrund der in y-Richtung quasi übereinander liegenden Führungspfade der Teilbündel L1₁-L1₄ liegt eine Vergrößerung der Austrittspupille der Abbildungsoptik 14 in der x-Richtung vor. Die Aufteilung in die zweiten Teilbündel L1₁₁-L1₁₄ und die Auskopplung von diesen führt zu einer Vergrößerung der Austrittspupille der Abbildungsoptik 14 in der y-Richtung. Damit der Benutzer das virtuelle Bild wahrnehmen kann, muss die Pupille 12 des Auges des Benutzers in der Austrittspupille der Ausbildungsoptik 14 liegen. Da erfindungsgemäß die Austrittspupille in x- und y-Richtung vergrößert ist, kann die erfindungsgemäße Anzeigevorrichtung 1 z.B. von unterschiedlichen Benutzern mit unterschiedlichen Augenabständen (was zu unterschiedlichen Positionen der jeweiligen Pupille 12 in y-Richtung führt) verwendet werden.

Zunächst wird in Verbindung mit Fig. 3 bis 5 die Ausbildung des Einkoppelabschnitts 10 detaillierter beschrieben, der die in x-Richtung beabstandeten ersten Teilbündel L1₁-L1₄ erzeugt und somit die Vergrößerung der Austrittspupille in der x-Richtung ermöglicht. Dazu weist der Einkoppelabschnitt 10 einen ersten plattenförmigen Abschnitt 20 und einen davon beabstandeten zweiten plattenförmigen Abschnitt 21 auf, wobei zwischen beiden plattenförmigen Abschnitten 20 und 21 ein Luftspalt 22 vorliegt.

Der erste plattenförmige Abschnitt 20 weist eine erste Seite 23, die vom Luftspalt 22 weg weist, sowie eine zweite Seite 24, die zum zweiten plattenförmigen Abschnitt 21 weist, auf. Der zweite plattenförmige Abschnitt 21 weist eine zum ersten plattenförmigen Abschnitt 20 weisende erste Seite 25 sowie eine vom ersten plattenförmigen Abschnitt 20 weg weisende zweite Seite 26 auf.

Die Lichtbündel L1-L3 treten über die erste Seite 23 des ersten plattenförmigen Abschnittes 20 in diesen ein und laufen bis zur zweiten Seite 24. In diesem Bereich ist ein erstes reflektierendes Gitter 27 ausgebildet, das die Lichtbündel L1-L3 (nachfolgend wird zur Vereinfachung nur noch von dem Lichtbündel L1 gesprochen) vertikal bzw. in x-Richtung beugt (1. Beugungsordnung). Die vertikal gebeugten Lichtbündel laufen zur ersten Seite 23, die in diesem Bereich ein zweites reflektierendes Gitter 28 aufweist, das so ausgebildet ist, dass ein Teil (erstes Teilbündel L1₁) in Richtung zur zweiten Seite 24 hin gebeugt und unter einem solchen Winkel (hier 90°) auf die zweite Seite 24 trifft, dass es den ersten plattenförmigen Abschnitt 20 verlässt, durch den Luftspalt 22 läuft, über die erste Seite 25 des zweiten plattenförmigen Abschnittes 21 in diesen eintritt und auf ein drittes reflektierendes Gitter 29 trifft, das an der zweiten Seite 26 ausgebildet ist. Das dritte Gitter 29 reflektiert das erste Teilbündel L1₁ so in horizontaler Richtung (y-Richtung), dass es durch innere Totalreflexion an Rückseite 6 und Vorderseite 5 bis zum Auskoppelabschnitt 11 geführt wird. In den Darstellungen von Fig. 3 und 5 ist der Abstand zwischen Einkoppel- und Auskoppelabschnitt 10, 11 deutlich verkürzt dargestellt.

Der nicht gebeugte Teil des Lichtbündels L1 beim erstmaligen Auftreffen auf das zweite reflektierende Gitter 28 und somit der Anteil der nullten Beugungsordnung L1' wird zur zweiten Seite 24 des ersten plattenförmigen Abschnittes 20 reflektiert und von dieser wiederum zur zweiten Seite 24 hin reflektiert, an der dieser Teil L1' erneut auf das zweite reflektierende Gitter 28 trifft. Der dabei gebeugte Teil L1₂ läuft durch die zweite Seite 24, den Luftspalt 22, die erste Seite 25 und trifft an der zweiten Seite 26 auf das dritte reflektierende Gitter 29. Der Auftreffbereich des ersten Teilbündels L1₂ ist gegenüber dem Auftreffbereich des ersten Teilbündels L1₁ in x-Richtung versetzt, wie Fig. 3 und 4 zu entnehmen ist. Das erste Teilbündel L1₂ wird durch das dritte reflektierende Teilbündel 29 wiederum in horizontaler Richtung umgelenkt und somit aufgrund der inneren Totalreflexion an Rückseite 6 und Vorderseite 5 bis zum Auskoppelabschnitt 11 geführt. Wie in den Darstellungen von Fig. 3 und 4 sind vier erste Teilbündel L1₁-L1₄ dargestellt, deren Führungspfade in x-Richtung übereinander liegen.

Jedes dieser ersten Teilbündel L1₁-L1₄ wird dann mittels des Auskoppelabschnitts 11 ein oder mehrmals in y-Richtung zueinander versetzt ausgekoppelt, wie beispielshalber nur für den untersten der Führungspfade der ersten Teilbündel L1₁ in Fig. 5 gezeigt ist. Das erste Teilbündel L1₁ wird in vier zweite Teilbündel L1₁₁, L1₁₂, L1₁₃, L1₁₄ aufgeteilt, die in y-Richtung voneinander beabstandet ausgekoppelt werden.

Nachfolgend werden zur Vereinfachung der Beschreibung häufig nur die Lichtbündel L1-L3 beschrieben (gemeint sind tatsächlich die entsprechenden ersten und zweiten Teilbündel).

Der Auskoppelabschnitt 11 ist hier so ausgebildet, dass er ein viertes reflektierendes Gitter 30 aufweist, das die Auskopplung der zweiten Teilbündel L1₁₁-L1₁₄ über die erste Beugungsordnung des vierten Gitters 30 verwirklicht. Der nicht ausgekoppelte Teil wird vom vierten Gitter 30 als nullte Beugungsordnung so zur Rückseite 6 des ersten Brillenglases 3 reflektiert, dass die entsprechenden Lichtbündel L1-L3 und/oder ein Teil der entsprechenden Lichtbündel L1-L3 nach einer inneren Totalreflexion an der Rückseite 6 erneut auf das vierte Gitter 30 in einem Bereich, der in y-Richtung von dem Bereich des ersten Auftreffens beabstandet ist, treffen. Von diesen Lichtbündeln L1-L3 bzw. Lichtbündelteilen wird wiederum nur ein Teil ausgekoppelt (erste Beugungsordnung, zweites Teilbündel L1₁₂). Der restliche Teil wird wiederum so zur Rückseite 6 hin reflektiert (nullte Beugungsordnung), dass nach einer inneren Totalreflexion an der Rückseite 6 die Lichtstrahlen der Lichtbündel L1-L3 bzw. der Lichtbündelteile wiederum auf das vierte Gitter 30 treffen. Das vierte Gitter 30 ist hier so ausgelegt, dass es maximal fünf Auskopplungen durchführt (bei der bisherigen Beschreibung in Verbindung mit Fig. 3-5 wurden zur Vereinfachung nur vier Auskopplungen angegeben). Mit jeder Auskopplung wird somit ein zweites Teilbündel L1₁₁-L1₁₄ des jeweiligen ersten Teilbündels L1₁-L1₄ erzeugt, wobei die zweiten Teilbündel in y-Richtung zueinander versetzt sind. Das vierte Gitter 30 ist hier so ausgelegt, dass sich die benachbarten zweiten Teilbündel eines ersten Teilbündels L1₁-L1₄ in der Ebene der Austrittspupille jeweils teilweise überlappen. Somit ist die Austrittspupille der Abbildungsoptik 14 in der y-Richtung bzw. die Eyebox der Abbildungsoptik 14 (der Bereich, in dem sich das Auge des Benutzers bewegen und der Benutzer stets das ausgekoppelte Bild wahrnehmen kann) in der y-Richtung größer ist als die Augenpupille, wobei gleichzeitig ein großes Sichtfeld in der y-Richtung vorliegt.

Bei der hier beschriebenen Ausführungsform weist das dem Benutzer bereitgestellte Sichtfeld eine Größe von 12° x 4° mit einem Durchmesser der Eyebox von 7 mm auf, wobei für die Augenpupille ein Durchmesser von 3 mm angenommen wird.

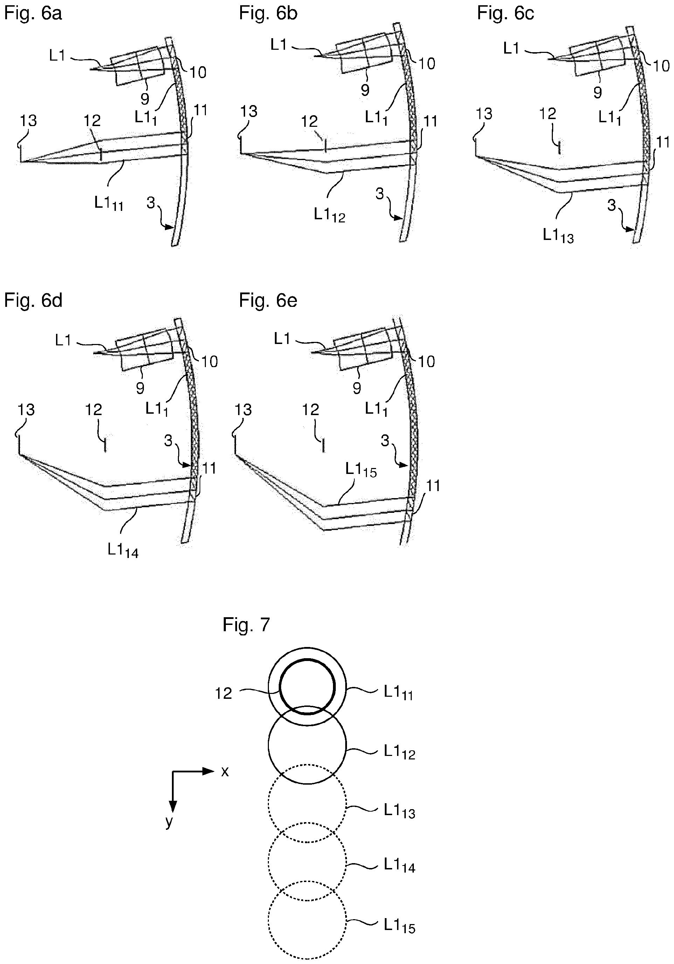

In Fig. 6a-6e sind die einzelnen Auskopplungen für den oberen Feldwinkel von +6° des bereitgestellten Sichtfeldes schematisch dargestellt. Der obere Feldwinkel entspricht auf dem Bildgeber 8 (bzw. dem flächigen Lichtmodulator des Bilderzeugungsmoduls) einem y-Wert von 2mm bezogen auf die Mitte des Bildgebers 8. In Fig. 6a ist die beim ersten Auftreffen des ersten Teilbündels L1₁ auf das vierte Gitter 30 bewirkte erste Auskopplung und somit das zweite Teilbündel L1₁₁ des ersten Teilbündels L1₁ gezeigt. In Fig. 6b-6e sind dann die beim zweiten bis fünften Auftreffen bewirkte zweite bis fünfte Auskopplung und somit zweiten Teilbündel bzw. zweiten Teillichtbündel L1₁₂, L1₁₃, L1₁₄, L1₁₅ gezeigt.

Wie den Darstellungen in Fig. 6a-6e zu entnehmen ist, stammt der Hauptteil des für den Benutzer wahrnehmbaren Lichtes von der ersten Auskopplung (zweites Teilbündel L1₁₁). Ein kleiner Teil stammt von der zweiten Auskopplung (zweites Teilbündel L1₁₂). Das Licht der dritten bis fünften Auskopplung würde der Benutzer nicht mehr wahrnehmen. Daher ist das vierte Gitter (bzw. das Auskoppelgitter) 30 so ausgelegt, dass das erste Teilbündel L1₁ möglichst vollständig über die erste und zweite Auskopplung ausgekoppelt wird. Da die dritte bis fünfte Auskopplung die Augenpupille 12 nicht treffen würde, wird hierfür das Auskoppelgitter 30 nicht ausgelegt. Die entsprechenden zweiten Teilbündel L1₁₃-L1₁₅ werden bei der üblichen Optimierungsrechnung zur Ermittlung der notwendigen Gitterparameter z.B. nicht berücksichtigt.

In Fig. 7 sind die zweiten Teilbündel L1₁₁-L1₁₅ für die fünf Auskopplungen des ersten Teilbündels L1₁ in der Ebene der Augenpupille 12 dargestellt, wobei die tatsächlich nicht erzeugten und nur zur Verdeutlichung der Erfindung beschriebenen zweiten Teilbündel L1₁₃-L1₁₅ gestrichelt eingezeichnet sind.

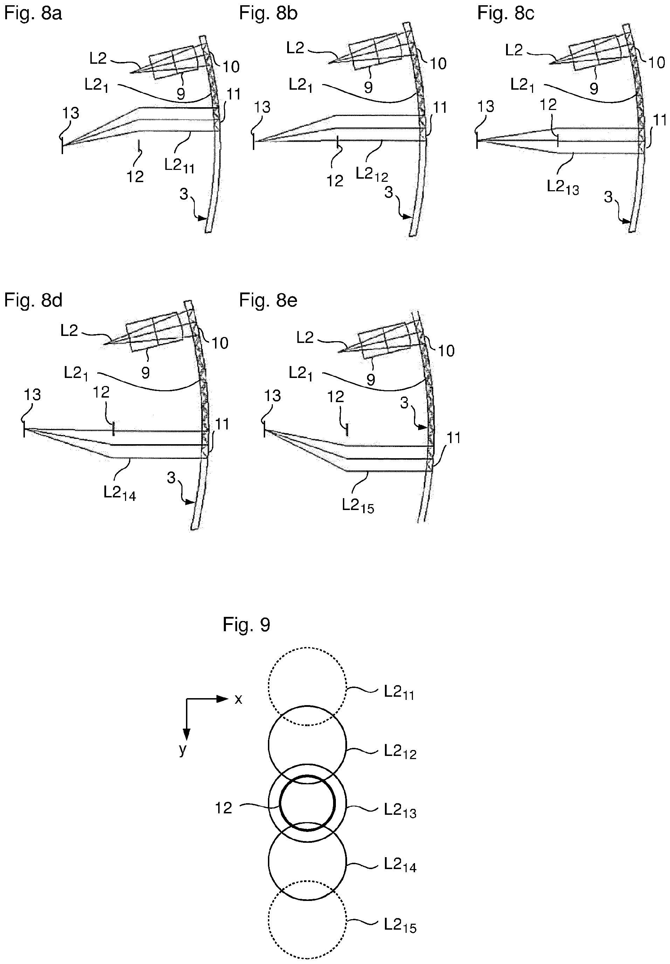

In Fig. 8a-8e sind die fünf Auskopplungen des ersten Lichtbündels L2₁ für einen mittleren Feldwinkel dargestellt, bei dem der Einfallswinkel auf die Augenpupille 12 senkrecht ist, was einem y-Wert auf dem Bildgeber von 0 mm und somit der Mitte des Bildgebers 8 in gleicher Weise wie in Fig. 6a-6e. In Fig. 9 ist in gleicher Weise wie in Fig. 7 die Position der Augenpupille 12 bezogen auf die fünf zweiten Teilbündel L2₁₁, L2₁₂, L2₁₃, L2₁₄, L2₁₅ dargestellt. Aus den Darstellungen gemäß Fig. 8a-8e und Fig. 9 ist ersichtlich, dass die dritte Auskopplung L2₁₃ des ersten Teilbündels L2₁ für den Betrachter das meiste Licht liefert. Die zweite und vierte Auskopplung L2₁₂ und L2₁₄ tragen nur mit einem geringen Teil bei. Daher ist das Auskoppelgitter 30 so ausgelegt, dass die Auskopplung des ersten Teilbündels L2₁ beim zweiten bis vierten Auftreffen auf das vierte Auskoppelgitter 30 erfolgt.

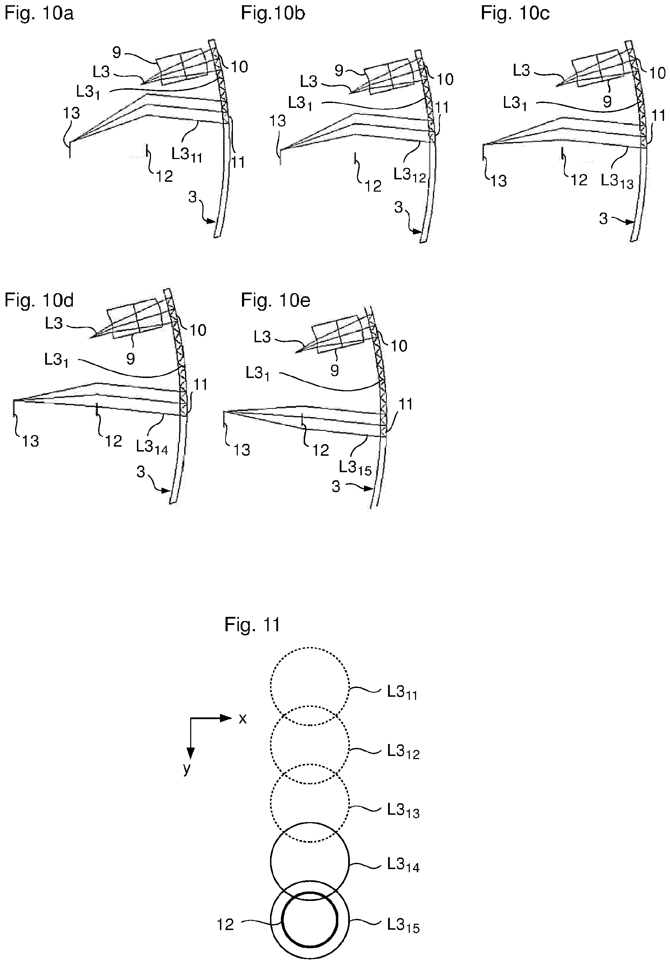

In Fig. 10a-10e ist in gleicher Weise wie in Fig. 6a-6e die Auskopplung für einen unteren Feldwinkel von - 6° (erstes Teilbündel L3₁) auf die Augenpupille 12 gezeigt, was einem y-Wert von -2 mm von der Mitte auf den flächigen Lichtmodulator des Bilderzeugungsmoduls 8 entspricht. In Fig. 11 ist wiederum die Position der Augenpupille 12 bezogen auf die ausgekoppelten Teillichtbündel L3₁₁, L3₁₂, L3₁₃, L3₁₄, L3₁₅ in Draufsicht gemäß Fig. 7 gezeigt. Aus den Fig. 10a-10e und 11 ist ersichtlich, dass der Hauptteil des Lichtes aus der fünften Auskopplung L3₁₅ stammt. Zum geringen Teil trägt noch die vierte Auskopplung L3₁₄ bei. Daher ist das Auskoppelgitter 30 so ausgelegt, dass die Auskopplung des ersten Teilbündels L3₁ beim vierten und fünften Auftreffen erfolgt.

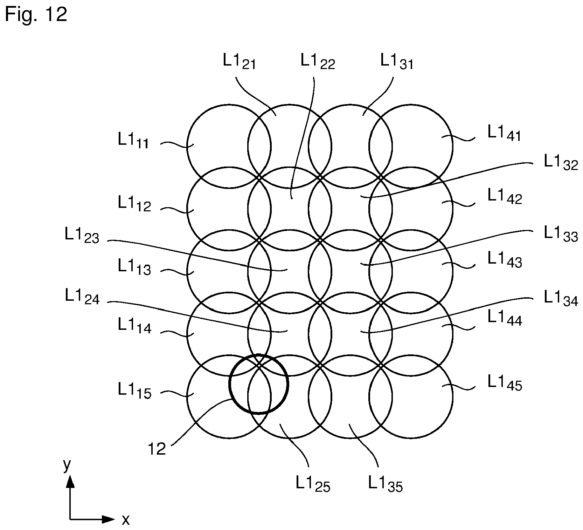

In Fig. 12 sind in der Ebene der Augenpupille bzw. in der Austrittspupille der Abbildungsoptik 14 alle zweiten Teilbündel L1₁₁-L1₁₅, L1₂₁-L1₂₅, L1₃₁-L1₃₅ und L1₄₁-L1₄₅ des Lichtbündels L1 schematisch dargestellt. Dies zeigt die erreichte Größe bzw. Vergrößerung der Austrittspupille in x- und y-Richtung.

Das Auskoppelgitter 30 weist bevorzugt für jede Auskopplung die optimale Gitterstruktur auf, wobei die Gitterstruktur bevorzugt so ausgelegt ist, dass für Feldwinkel, die von mehreren benachbarten Auskopplungen bedient werden, Deckungsgleichheit erreicht wird. Hierunter wird verstanden, dass im Rahmen der Augenauflösung (< 1 min) der gleiche Ort auf der Netzhaut 13 getroffen wird. Man kann auch sagen, dass für diese benachbarten Auskopplungen (benachbarte zweite Teilbündel) für einen Feldwinkel der gleiche Hauptstrahlwinkel vorliegt. Dies kann z.B. dadurch erreicht werden, dass sowohl das dritte Gitter 29 als auch das vierte Gitter 30 abbildend ausgelegt und simultan in Verbindung mit der konkreten Form des ersten Brillenglases 3 so optimiert werden, dass einerseits die Forderungen der Modulationsübertragungsfunktion erfüllt werden und andererseits die beschriebene Deckungsgleichheit erreicht wird. In der Regel wird ein Feldwinkel bzw. -punkt von maximal drei in y-Richtung benachbarten Auskopplungen bedient, so dass die Deckungsgleichheit somit für maximal drei benachbarte Auskopplungen erreicht werden sollte, was sich in der Praxis gut realisieren lässt.

Wenn man das dritte und vierte Gitter 29, 30 abbildend auslegt, können Abbildungsfehler, die durch den schrägen Einfall der ersten Teilbündel L1₁-L3₁ auf das vierte Gitter 30 bedingt sind, wie z.B. Astigmatismus und Koma, kompensiert werden. Der schräge Einfall auf das vierte Gitter 30 liegt unvermeidlich vor, da die ersten Teilbündel L1₁-L3₁ zum vierten Gitter 30 durch innere Totalreflexion an der Vorder- und Rückseite 5, 6 des ersten Brillenglases 3 geführt werden.

Die Zusatzoptik 9 ist so ausgelegt, dass die Lichtbündel L1-L3 als kollimierte Lichtbündel auf das Brillenglas 3 bzw. den Einkoppelabschnitt 10 treffen. Die Zusatzoptik 9 kann jedoch auch weggelassen werden. In diesem Fall kann z.B. der Einkoppelabschnitt 10 diese Kollimationsfunktion übernehmen.

Bevorzugt ist die Eintrittspupille der Abbildungsoptik 14 auf oder in die Nähe des dritten Gitters 29 gelegt, um eine möglichst geringe Ausdehnung des Lichtfleckes der Lichtbündel bzw. Lichtstrahlbündel L1-L3 aller Pixel des flächigen Lichtmodulators des Bilderzeugungsmoduls 8 auf dem dritten Gitter 29 zu erreichen.

Ferner weisen das dritte und vierte Gitter 29, 30 bevorzugt annährend die gleiche Mittenfrequenz auf, um die spektrale Abhängigkeit zu minimieren. Des weiteren können das dritte und vierte Gitter 29, 30 eine annährend gleich große Grunddispersion aufweisen, wodurch einerseits erreicht wird, dass das Licht wieder in Richtung des Auges aus dem Brillenglas 3 herausgebeugt wird. Andererseits wird erreicht, dass sich die farbabhängigen Beugungswinkel annähernd kompensieren. Dadurch breiten sich alle Farben nach Verlassen des Brillenglases 3 jeweils möglichst in die gleiche Richtung aus, so dass eine merkliche Farbaufspreizung verhindert werden kann. Zur Erreichung der Deckungsgleichheit kann die Ablage der einzelnen benachbarten Auskopplungen des jeweiligen zweiten Teilbündels zum geforderten Ziel-Bildort als Bewertungsgröße in die Meritfunktion der normalen Optimierung eingefügt werden, d.h. für jeden Ziel-Bildort werden die verschiedenen möglichen Auskoppelzweige, auf denen Licht zum Ziel-Bildort kommen kann, bezüglich Bildgüte (Modulationstransferfunktion, Spotgröße, etc.) sowie Überlagerungsgenauigkeit optimiert. Freiheitsgrade sind hierbei die Position der Laserquellen, die bei der Belichtung der Hologramme zur Erzeugung des dritten und vierten Gitters 29, 30 benutzt werden. Aufgrund der relativ geringen Brillenglasdicke sind die Unterschiede des Störungszustandes der Welle, welche durch die Totalreflexion an dem gekrümmten Brillenglas 3, 4 hervorgerufen werden, für die benachbarten Auskopplungen relativ gering und lassen sich daher recht gut optimieren.

Die Merkmale und Ausbildungen des dritten und vierten Gitters 29 und 30 können in gleicher Weise beim ersten und zweiten Gitter 27 und 28 verwirklicht sein. Auch diese beiden Gitter 27 und 28 können so ausgelegt sein, dass z.B. farbabhängige Beugungswinkel annähernd kompensiert werden. Auch können die beiden Gitter 27 und 28 zusammen optimiert werden.

Außerdem können noch zusätzliche Korrektionsoptiken (z.B. Linsen, Spiegel, computergenerierte Holgramme, etc.) in den Belichtungsaufbau der Hologramme gebracht werden, um eine zusätzliche Performanceverbesserung zu erzielen.

Um ein möglichst homogenen intensitätsmäßigen Feldverlauf zu erreichen, kann z.B. die Beugungseffizienz des vierten Gitters 30 und/oder des zweiten Gitters 28 mit ansteigender Auskopplung zunehmen. Dies kann durch einen geeigneten Verlauf der Profiltiefe des jeweiligen Gitters 30, 28 erzielt werden. Somit wird bei der ersten Auskopplung nur ein relativ geringer Teil der möglichen Beugungseffizienz verwendet und die Beugungseffizienz steigt von der ersten bis zur letzten Auskopplung an.

Ferner ist es möglich, einen Verlaufsfilter (z.B. variablen Graufilter) in der Nähe des Bilderzeugungsmoduls 8 anzuordnen. Es ist auch möglich, eine angepasste intensitätsmäßige ortsabhängige Abstrahlcharakteristik des Bildgebers vorzusehen.

Um ein möglichst gutes Ergebnis für Weißlicht zu erreichen, kann das dritte Gitter 29 und das vierte Gitter 30 jeweils als Superposition von z.B. drei entsprechenden Gittern ausgebildet sein, deren Mittenfrequenzen so ausgelegt sind, dass sich die Bündel für die entsprechenden mittleren Wellenlängen überlagern. Hierbei kann z.B. jeweils ein Gitterpaar auf rotes Licht, grünes Licht und blaues Licht abgestimmt sein. Gleiches gilt für das erste und zweite Gitter 27, 28.

Eine weitere Verbesserung der Effizienzeigenschaften kann dadurch erreicht werden, dass dritte und vierte Gitter 29, 30 und/oder das erste und zweite Gitter 27, 28 jeweils als reflektives Volumengitter ausgeführt werden.

Der Auskoppelabschnitt 11 ist so ausgelegt, dass der Benutzer das ausgekoppelte virtuelle Bild in Überlagerung mit der Umgebung wahrnehmen kann. Ferner können das dritte und vierte Gitter 29, 30 jeweils auf der Vorderseite 5 als reflektive Gitter ausgebildet sein. Die beiden plattenförmigen Abschnitte 20, 21 können z.B. dadurch gebildet werden, dass im Randbereich 15 ein Schlitz für den Luftspalt 22 erzeugt wird.

Bei der erfindungsgemäßen Anzeigevorrichtung treffen die ersten Teilbündel in Abhängigkeit der Position des zugehörigen Pixels des Bildgebers somit maximal n mal auf das vierte Gitter 30, wobei n eine ganze Zahl größer oder gleich 3 ist. Bei der hier beschriebenen Ausführungsform ist n gleich 5. Des weiteren wird jedes erste Teilbündel in Abhängigkeit der Position des zugehörigen Pixels bei 1 bis m aufeinanderfolgenden Auftreffen auf das vierte Gitter 30 ausgekoppelt, wobei m eine ganze Zahl größer oder gleich 1 und kleiner als n ist. Bei der hier beschriebenen Ausführungsform beträgt m für die ersten Teilbündel des Lichtbündels L1 2, für die ersten Teilbündel des Lichtbündels L2 3 und für die ersten Teilbündel des Lichtbündels L3 2. Die Auskopplung des jeweiligen ersten Teilbündels beginnt spätestens beim (n-m+1)-ten Auftreffen auf das vierte Gitter 30. Beim ersten Teilbündel L1₁ beginnt die Auskopplung beim ersten Auftreffen, beim ersten Teilbündel L2₁ beginnt die Auskopplung beim zweiten Auftreffen und beim ersten Teilbündel L3₁ beginnt die Auskopplung beim vierten Auftreffen auf das vierte Gitter 30.

Des weiteren liegt bei der beschriebenen Ausführungsform der Fall vor, dass für die gewünschte Auskopplung der entsprechenden ersten Teilbündel zwei bis drei Auskopplungen bzw. Beugungsauskopplungen benötigt werden. Es ist jedoch auch möglich, dass für zumindest eines der ersten Teilbündel L1-L3 nur eine Beugungsauskopplung benötigt wird.

Da das dritte Gitter 29 die ersten Teilbündel L1₁-L1₄ so stark beugen muss, dass die ersten Teilbündel L1₁-L1₄ dann durch eine innere Totalreflexion im Brillenglas 3 geführt sind, wird eine Gitterfrequenz von ca. 1700 - 2300 Linien/mm benötigt. Bei grünem Licht wird z.B. eine Gitterfrequenz von ca. 2000 Linien/mm, bei rotem Licht wird z.B. eine Gitterfrequenz von ca. 1700/mm und bei blauem Licht wird z.B. eine Gitterfrequenz von ca. 2300/mm benötigt. Gleiches gilt dann für das vierte Gitter 30, das die mittels Totalreflexion auf sich gerichteten ersten Teilbündel L1₁-L1₄ zum Auge des Benutzers hin auskoppeln muss. Daher ist es bevorzugt, das dritte und vierte Gitter 29, 30 durch holographische Belichtung mit Plan- und/oder Kugelwellen herzustellen. Die Positionen der Laserquellen, die bei der Belichtung der Hologramme benutzt werden, sind dabei mögliche Korrekturparameter für die Korrektur der Modulationstransferfunktion und der Deckungsgleichheit. Zur Verbesserung kann insbesondere noch mit deformierten Wellenfronten gearbeitet werden. Dabei können bei der Belichtung der Gitter spezielle Optiken oder auch computergenerierte Hologramme in den Belichtungsstrahlengang zur weiteren Verbesserung der Gesamtperformance eingebracht werden.

Bei der bisher beschriebenen Ausführungsform ist der Einkoppel- und Auskoppelabschnitt 10, 11 jeweils diffraktiv ausgebildet. Es ist jedoch auch möglich, den Einkoppel- und Auskoppelabschnitt 10, 11 jeweils als nicht diffraktiven Abschnitt auszubilden. Beispielsweise kann der Ein- und Auskoppelabschnitt 10, 11 jeweils als teilreflektiver Abschnitt ausgebildet sein.

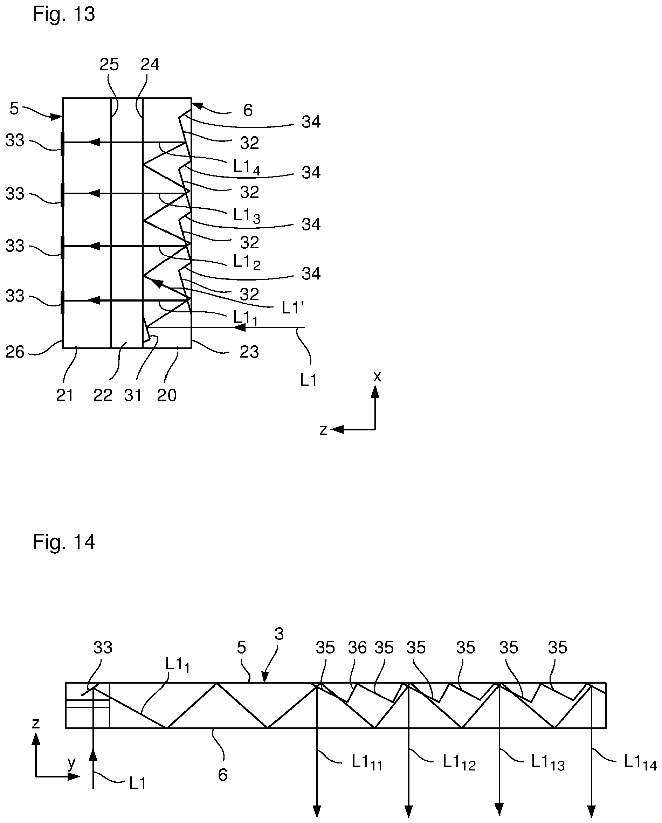

In Fig. 13 ist in gleicher Weise wie in Fig. 4 der Einkoppelabschnitt 10 schematisch dargestellt, wobei gleiche Elemente mit gleichen Bezugszeichen bezeichnet sind und in deren Beschreibung auf die obigen Ausführungen verwiesen wird. Im Unterschied zu der Ausführungsform gemäß Fig. 4 sind bei dem Einkoppelabschnitt 10 gemäß Fig. 13 keine Gitter vorgesehen, sondern eine reflektive Facette 31 an der zweiten Seite 24 des ersten plattenförmigen Abschnitts, teilreflektive Facetten 32 an der ersten Seite 23 des ersten plattenförmigen Abschnitts 20 sowie reflektive Facetten 33 an der zweiten Seite 26 des zweiten plattenförmigen Abschnitts 21.

Die Facetten 31-33 sind so ausgerichtet, dass ein über die erste Seite 23 in den ersten plattenförmigen Abschnitt 20 eintretendes Lichtbündel L1 zur ersten Seite 23 zurückreflektiert wird und auf eine erste (oder mehrere) Facette(n) 32 trifft. Ein Teil des Lichtbündels L1 wird als erstes Teilbündel L1₁ so umgelenkt, dass es durch die zweite Seite 24, die erste Seite 25 läuft und auf die reflektiven Facetten 33 trifft, die die Umlenkung in y-Richtung bewirken. Die an der Facette 32 nicht reflektierte Teil des Lichtbündels L1 läuft durch die Facette 32 hindurch und trifft auf die erste Seite 23, an der eine innere Totalreflexion in Richtung zur zweiten Seite 24 hin erfolgt, so dass dieser Teil L1' erneut durch die teilreflektive Facette 32 läuft, an der zweiten Seite 24 durch innere Totalreflexion wiederum zur ersten Seite 23 hin umgelenkt wird und somit erneut auf teilreflektive Facetten 32 trifft. Dort findet in gleicher Weise wiederum eine Aufspaltung statt, so dass das Lichtbündel L1 in mehrere Teilbündel L1₁-L1₄ aufgeteilt wird, die in das Brillenglas 3 so eingekoppelt werden, dass sie durch innere Totalreflexion an Rück- und Vorderseite 6, 5 bis zum Auskoppelabschnitt 11 geführt werden.

Die teilreflektiven Facetten sind durch Flanken 34 verbunden. Diese können bevorzugt transparent oder teiltransparent sein, so dass an der ersten Seite 32 totalreflektierte Lichtstrahlen auch durch die Flanken 34 laufen können.

Wie der Darstellung in Fig. 14 entnommen werden kann, weist der Auskoppelabschnitt 11 mehrere teilreflektive Facetten 35 auf, die durch Flanken 36 verbunden sind, die bevorzugt transparent oder teilreflektiv sind.

Wie der Darstellung in Fig. 14 entnommen werden kann, wirken die teilreflektiven Facetten 35 als Strahlteiler, so dass der jeweils reflektierte Anteil des ersten Teilbündels L 11 als zweites Teilbündel L1₁₁-L1₁₄ ausgekoppelt und der transmittierte Anteil nach erneuter Totalreflexion an Vorderseite 5 und Rückseite 6 zu einer weiteren Auskopplung (in y-Richtung versetzt) führt.

Natürlich können die beschriebenen Ausführungsformen auch miteinander kombiniert werden. So kann beispielsweise am ersten plattenförmigen Abschnitt 20 die in Verbindung mit Fig. 13 beschriebenen Facetten 31, 32 ausgebildet sein, wohingegen am zweiten plattenförmigen Abschnitt 21 das dritte Gitter 29 und im Auskoppelabschnitt 10 das vierte Gitter 30 vorgesehen sind. Ferner ist es möglich, am ersten plattenförmigen Abschnitt das erste und zweite Gitter 27 und 28 vorzusehen und am zweiten plattenförmigen Abschnitt 21 sowie im Auskoppelabschnitt 11 die entsprechenden Facetten 33 und 35 vorzusehen.

Die beschriebenen fünf Auskopplungen sind nur beispielhaft zu verstehen. Natürlich können auch weniger (jedoch zumindest drei) oder mehr Auskopplungen vorgesehen sein. Mit mehr Auskopplungen kann ein größeres Sichtfeld bereitgestellt werden.

Des weiteren wurde bisher die erfindungsgemäße Anzeigevorrichtung nur für ein Brillenglas (das linke Brillenglas 3) beschrieben. Die erfindungsgemäße Anzeigevorrichtung kann so ausgebildet sein, dass nur über ein Brillenglas (beispielsweise das linke Brillenglas) zusätzliche Informationen (Bild des Bildgebers 8) erzeugt und dem Benutzer in seinem Blickfeld eingespiegelt werden. Natürlich ist es auch möglich, beide Brillengläser so auszubilden, so dass dem Benutzer für beide Augen zusätzliche Informationen eingespiegelt werden können. In diesem Fall können die Informationen auch so eingespiegelt werden, dass für den Benutzer ein dreidimensionaler Bildeindruck der eingespiegelten Informationen entsteht.

Die Brillengläser 3, 4 können Brillengläser zur Korrektur einer Fehlsichtigkeit sein. Sie müssen aber nicht solche Brillengläser sein, sie können auch ohne optische Korrekturwirkung hinsichtlich eines Sehfehlers sein. Die erfindungsgemäße Anzeigevorrichtung 1 kann als Sportbrille, Sonnenbrille und/oder Brille zur Korrektur einer Fehlsichtigkeit ausgebildet sein.

Die Brillengläser 3, 4 und insbesondere das linke Brillenglas 3 sind nur beispielshalber zusammen mit der erfindungsgemäßen Anzeigevorrichtung 1 beschrieben. Die Brillengläser 3, 4 bzw. zumindest das linke Brillenglas 3 sind jeweils für sich als erfindungsgemäßes Brillenglas 3, 4 ausgebildet. Das erfindungsgemäße linke Brillenglas 3 kann natürlich auch als rechtes Brillenglas ausgebildet sein.

Die Erfindung kann beispielshalber auch folgendermaßen charakterisiert werden:
1. Brillenglas für eine auf den Kopf eines Benutzers aufsetzbare und ein Bild erzeugende Anzeigevorrichtung (1),
   mit einer Vorderseite (5) und einer Rückseite (6), wobei die Vorderseite (5) und/oder die Rückseite (6) gekrümmt sind/ist,
   und mit, in Draufsicht auf das Brillenglas (3, 4) gesehen, einem Einkoppelabschnitt (10) in einem Randbereich (15) des Brillenglases (3, 4) und einem Auskoppelabschnitt (11) in einem Mittelbereich (16) des Brillenglases (3, 4),
   wobei das Brillenglas (3, 4) dazu geeignet ist, Lichtbündel (L1, L2, L3) von Pixeln des erzeugten Bildes über den Einkoppelabschnitt (10) in das Brillenglas (3, 4) einzukoppeln, im Brillenglas (3, 4) bis zum Auskoppelabschnitt (11) zu führen und über den Auskoppelabschnitt (11) aus dem Brillenglas (3, 4) auszukoppeln,
   wobei bei der Einkopplung der Einkoppelabschnitt (10) zumindest eines der Lichtbündel (L1) in jeweils mehrere erste Teilbündel (L11, L12, L13, L14) so aufteilt und so in einer ersten Richtung voneinander versetzt in das Brillenglas (3, 4) einkoppelt, dass die ersten Teilbündel (L11-L14) im Brillenglas (3, 4) entlang einer quer zur ersten Richtung verlaufenden zweiten Richtung bis zum Auskoppelabschnitt (11) geführt sind,
   und wobei bei der Auskopplung der Auskoppelabschnitt (11) zumindest eines der ersten Teilbündel (L11) in jeweils mehrere zweite Teilbündel (L111, L112, L113, L114) aufteilt und in der zweiten Richtung voneinander versetzt aus dem Brillenglas auskoppelt.
2. Brillenglas nach Nummer 1, bei dem der Einkoppel- und der Auskoppelabschnitt (10, 11) jeweils ein Gitter (29, 30) aufweisen.
3. Brillenglas nach Nummer 2, bei dem die ersten Teilbündel (L11) in Abhängigkeit der Position des zugehörigen Pixels maximal n mal und auf das Gitter (30) des Auskoppelabschnitts (11) treffen, wobei n eine ganze Zahl größer oder gleich drei ist, und wobei die ersten Teilbündel (L11) in Abhängigkeit der Position des zugehörigen Pixels bei 1 bis m aufeinanderfolgenden Auftreffen auf das Gitter (30) des Auskoppelabschnitts (11) ausgekoppelt werden, wobei m eine ganze Zahl größer oder gleich eins und kleiner als n ist und die Auskopplung spätestens beim (n-m+1)-ten Auftreffen beginnt.
4. Brillenglas nach Nummer 2 oder 3, bei dem das Gitter (29) des Einkoppelabschnitts (10) und/oder das Gitter (30) des Auskoppelabschnitts (11) als abbildendes Gitter (29, 30) ausgebildet sind/ist.
5. Brillenglas nach einer der Nummern 2 bis 4, bei dem das Gitter (30) des Auskoppelabschnitts (11) so ausgelegt ist, dass seine Beugungseffizienz für ein erstes Teilbündel (L11) von der ersten bis zur m-ten Auskopplung hin ansteigt.
6. Brillenglas nach einer der Nummern 2 bis 5, bei dem das Gitter (29) des Einkoppelabschnitts (10) und das Gitter (30) des Auskoppelabschnitts (11) jeweils eine Überlagerung von mehreren Einzelgittern ist, die auf unterschiedliche Mittenfrequenzen ausgelegt sind, wobei die Mittenfrequenzen der Einzelgitter für die beiden Gitter (29, 30) jeweils paarweise zusammenfallen.
7. Brillenglas nach einer der obigen Nummern, bei dem der Einkoppelabschnitt (10) ein erstes und ein zweites Einkoppelgitter (27, 28) aufweist, wobei das zumindest eine Lichtbündel (L1) vom ersten Einkoppelgitter (27) auf das zweite Einkoppelgitter (28) gelenkt wird und das zweite Einkoppelgitter (28) die Aufteilung in die mehreren ersten Teilbündel (L11-L14) bewirkt.
8. Brillenglas nach einer der obigen Nummern, bei dem der Einkoppelabschnitt (10) und/oder der Auskoppelabschnitt (11) mehrere teilreflektive Facetten (32, 35) aufweist, um durch Reflexion und Transmission die Aufteilung in die ersten und/oder zweiten Teilbündel (L11-L14; L111 -L114) zu bewirken.
9. Anzeigevorrichtung mit
   einer auf den Kopf eines Benutzers aufsetzbaren Haltevorrichtung (2),
   einem an der Haltevorrichtung (2) befestigten Bilderzeugungsmodul (8), das ein Bild erzeugt, und
   einer an der Haltevorrichtung (2) befestigten Abbildungsoptik (14), die ein Brillenglas nach einer der obigen Nummern aufweist und die das erzeugte Bild im auf den Kopf aufgesetzten Zustand der Haltevorrichtung (2) so abbildet, dass es der Benutzer als virtuelles Bild wahrnehmen kann.

## Patentansprüche

1. Brillenglas für eine auf den Kopf eines Benutzers aufsetzbare und ein Bild erzeugende Anzeigevorrichtung (1),
mit einer Vorderseite (5) und einer Rückseite (6),
und mit, in Draufsicht auf das Brillenglas (3, 4) gesehen, einem Einkoppelabschnitt (10) in einem Randbereich (15) des Brillenglases (3, 4) und einem Auskoppelabschnitt (11) in einem Mittelbereich (16) des Brillenglases (3, 4),
wobei das Brillenglas (3, 4) dazu geeignet ist, Lichtbündel (L1, L2, L3) von Pixeln des erzeugten Bildes über den Einkoppelabschnitt (10) in das Brillenglas (3, 4) einzukoppeln, im Brillenglas (3, 4) bis zum Auskoppelabschnitt (11) zu führen und über den Auskoppelabschnitt (11) aus dem Brillenglas (3, 4) auszukoppeln,
wobei bei der Einkopplung der Einkoppelabschnitt (10) zumindest eines der Lichtbündel (L1) in jeweils mehrere erste Teilbündel (L1₁, L1₂, L1₃, L1₄) so aufteilt und so in einer ersten Richtung voneinander versetzt in das Brillenglas (3, 4) einkoppelt, dass die ersten Teilbündel (L1₁-L1₄) im Brillenglas (3, 4) entlang einer quer zur ersten Richtung verlaufenden zweiten Richtung bis zum Auskoppelabschnitt (11) geführt sind,
wobei bei der Auskopplung der Auskoppelabschnitt (11) zumindest eines der ersten Teilbündel (L1₁) in jeweils mehrere zweite Teilbündel (L1₁₁, L1₁₂, L1₁₃, L1₁₄) aufteilt und in der zweiten Richtung voneinander versetzt aus dem Brillenglas auskoppelt,
wobei der Einkoppelabschnitt (10) mehrere teilreflektive Facetten (32) aufweist, um durch Reflexion und Transmission die Aufteilung in die ersten Teilbündel (L1₁, L1₂, L1₃, L1₄) zu bewirken,
und wobei der Auskoppelabschnitt (11) mehrere teilreflektive Facetten (35) aufweist, um durch Reflexion und Transmission die Aufteilung in die zweiten Teilbündel (L1₁₁, L1₁₂, L1₁₃, L1₁₄) zu bewirken.

2. Brillenglas nach Anspruch 1, bei dem der Einkoppelabschnitt (10) mehrere reflektive Facetten (33) aufweist, die eine Umlenkung der ersten Teilbündel (L1₁-L1₄) in die zweite Richtung bewirken.

3. Brillenglas nach Anspruch 1 oder 2, bei dem
der Einkoppelabschnitt (10) einen ersten und einen zweiten plattenförmigen Abschnitt (20, 21) aufweist,
wobei die teilreflektive Facetten (32) des Einkoppelabschnitts (10) an einer ersten Seite (23) des ersten plattenförmigen Abschnitts (20) angeordnet sind.

4. Brillenglas nach Anspruch 2 und 3, bei dem
die reflektiven Facetten (33) des Einkoppelabschnitts (10) an einer zweiten Seite (26) des zweiten plattenförmigen Abschnitts (21) angeordnet sind.

5. Brillenglas nach Anspruch 3 oder 4, bei dem
die beiden plattenförmigen Abschnitte (20, 21) durch einen Luftspalt getrennt sind.

6. Brillenglas nach einem der Ansprüche 2 bis 5, bei dem
der Einkoppelabschnitt (10) das mindestens eine Lichtbündel (L1) in jeweils mehrere erste Teilbündel (L1₁, L1₂, L1₃, L1₄) dadurch aufteilt,
dass das mindestens eine Lichtbündel (L1) auf eine oder mehrere teilreflektive Facetten (32) des Einkoppelabschnitts (10) trifft, die einen Teil des Lichtbündels (L1) zu den reflektiven Facetten (33) hin reflektiert bzw. reflektieren und den nicht reflektierten Teil des Lichtbündels (L1) transmittiert bzw. transmittieren,
wobei der transmittierte Teil an der ersten Seite (23) des ersten plattenförmigen Abschnitts (20) durch innere Totalflexion zur zweiten Seite (24) des ersten plattenförmigen Abschnitts (20) hin reflektiert wird, durch die teilreflektive Facetten (32) des Einkoppelabschnitts (10) hindurch läuft und auf die zweite Seite (24) des ersten plattenförmigen Abschnitts (20) trifft und dort durch innere Totalreflexion wiederum zur ersten Seite (23) des ersten plattenförmigen Abschnitts (20) hin umgelenkt wird und somit erneut auf teilreflektive Facetten (32) des Einkoppelabschnitts (10) trifft.

7. Brillenglas nach einem der Ansprüche 3 bis 6, bei dem
der erste plattenförmigen Abschnitt (20) an seiner zweiten Seite eine reflektive Facette (31) aufweist, die ein über die erste Seite (23) des ersten plattenförmigen Abschnitts (20) eintretendes Lichtbündel (L1) zur ersten Seite (23) des ersten plattenförmigen Abschnitts (20) zurückreflektiert, um eine oder mehrere teilreflektive Facetten (32) des Einkoppelabschnitts (10) zu treffen.

8. Brillenglas nach einem der obigen Ansprüche, bei dem
die teilreflektiven Facetten (32) des Einkoppelabschnitts (10) durch Flanken (36) verbunden sind, wobei die Flanken (36) transparent oder teiltransparent sind.

9. Brillenglas nach einem der obigen Ansprüche, bei dem
die Vorderseite (5) und/oder die Rückseite (6) gekrümmt sind/ist.

10. Anzeigevorrichtung mit
einer auf den Kopf eines Benutzers aufsetzbaren Haltevorrichtung (2),
einem an der Haltevorrichtung (2) befestigten Bilderzeugungsmodul (8), das ein Bild erzeugt, und
einer an der Haltevorrichtung (2) befestigten Abbildungsoptik (14), die ein Brillenglas nach einem der obigen Ansprüche aufweist und die das erzeugte Bild im auf den Kopf aufgesetzten Zustand der Haltevorrichtung (2) so abbildet, dass es der Benutzer als virtuelles Bild wahrnehmen kann.
